(19) Europäisches Patentamt

European Patent Office

Office européen des brevets

(11) Publication number: **0 217 478 B1**

(12) **EUROPEAN PATENT SPECIFICATION**

(45) Date of publication of patent specification: **24.07.91**   (51) Int. Cl.⁵: **G01D 5/14, G01D 3/02**

(21) Application number: **86201692.0**

(22) Date of filing: **01.10.86**

(54) **Contactless angle transducer.**

(30) Priority: **01.10.85 NL 8502683**

(43) Date of publication of application:
**08.04.87 Bulletin 87/15**

(45) Publication of the grant of the patent:
**24.07.91 Bulletin 91/30**

(84) Designated Contracting States:
**AT BE CH DE ES FR GB IT LI LU NL SE**

(56) References cited:
**FR-A- 2 159 862**
**NL-A- 7 701 798**

(73) Proprietor: **Twente Technology Transfer B.V.**
**Institutenweg 1**
**NL-7521 PH Enschede(NL)**

(72) Inventor: **Eijkel, Cornelis Jacobus Maria**
**Westerstraat 136**
**NL-7522 DD Enschede(NL)**
Inventor: **Fluitman, Johannes Hermanus Jo-**
**sephus**
**Volberthorst 7**
**NL-7531 DX Enschede(NL)**

(74) Representative: **Schumann, Bernard Herman**
**Johan et al**
**OCTROOIBUREAU ARNOLD & SIEDSMA**
**Sweelinckplein 1**
**NL-2517 GK The Hague(NL)**

## Description

The invention relates to an angle transducer having at least one magnetically active element that is connected with a control and signal processing unit and a magnet cooperating therewith and relatively thereto rotatably positioned in such a way that an electrical property of that or each magnetically active element varies in dependence upon its angular position relative to the magnet, said control and signal processing unit being adapted for measuring the value of a quantity related with said property and generating a signal representative for said value and thus for said relative angular position.

Such an angle transducer is known from US patent specification 3 777 273.

Such a prior art angle transducer has a number of disadvantages. It uses the ordinary Hall-effect, according to which the voltage supplied by the Hall-element is proportional with the magnetic flux. Due thereto this voltage is dependent upon the strength of the magnet and the distance of the magnet to the sensor. The strength of magnets is, in general, difficult to control, i.e. magnets cannot always be manufactured such that their strength is between narrow, predetermined tolerance limits. This fact, together with the critical distance of the magnet to the sensor implies that the angle transducer is more difficult to manufacture.

The modulation depth is temperature dependent, even in case of application of a bridge circuit. Therefore additional compensation circuits are necessary, unless a low accuracy is accepted.

The purpose of the invention is the provision of an angle transducer, that has not the above-mentioned disadvantages of the prior art. The aim is to engineer the angle transducer in such a way, that it can be manufactured simply and thus cheaply, and nevertheless, if desired having a high accuracy and the control and signal processing unit may be simple.

These purposes are, according to the invention, generally realized by an angle transducer of the type mentioned in the preamble and which is characterized by

at least one set of two mutually parallel flat thin films of magnetically soft material that it is kept in saturation by the magnet, said films exhibiting resistance anisotropy, having each two current passing terminals positioned at the ends of a first diagonal and two voltage measuring terminals positioned at the ends of a second diagonal positioned perpendicularly relative to said first diagonal, said first and said second diagonals forming angles of 45° with said first and second diagonals of the second film 7;

control means forming part of the signal processing unit for supplying electrical currents through the current passing terminals of both films;

measuring means forming part of the signal processing unit for measuring the voltages over the voltage measuring terminals of both films; and

signal processing means forming part of the signal processing unit for calculating said angular position from both voltages.

It should be noted that from the German patent specification 29 15 461 a device is known for measuring rotation sense and rotation speed. With such a device only a AC-component can be measured, which is much more easy than a DC-component in case of stationary measurements. If this device would be used as an angle transducer it would exhibit a plurality of substantial drawbacks.

Firstly the signal supplied by the transducer and representative for the relative angular position to be measured is not proportional with that angular position, but varies with the $\sin^2$ of the angular position.

Furthermore the modulation depth can, due to the nature of the measurement, not be larger than in the order of 2%. This has the consequence that the additional electronics have to satisfy extreme requirements in order to achieve an acceptable resolution and an acceptable measuring accuracy. In practice the electronics cannot satisfy such requirements.

Use may be made of an embodiment in which both films are disc-shaped.

In an embodiment in which both films are ring-shaped a higher output voltage is obtained upto in the order of magnitude of a factor ten, in comparison with an angle transducer provided with disc-shaped films having approximately the same dimensions and through which the same current flows.

In order to maximize in this last-mentioned case the sensitivity as much as possible, one can use an embodiment having the special feature that a part of the ring-shaped film extending between a current passing terminal and a voltage measuring terminal is in the form of a plurality of concentrically arranged strips, each of said strips extending over an angle of 90°, and said strips in meander-fashion electrically connected with their ends by means of radial connection strips. In this case the connection strips have an electrical resistance substantially zero.

For an embodiment, in which both films are in the form of round discs, the signal processing means are adapted for calculating said angular position from both said voltages according to the relations:

$$V_1 = kI_1 \, \frac{\Delta\rho_1}{2d_1} \, \sin 2\theta$$

$$V_2 = kI_2 \, \frac{\Delta\rho_2}{2d_2} \, \cos 2\theta$$

in which

| | |
|---|---|
| $V_1$ | = the voltage over the first film |
| $V_2$ | = the voltage over the second film |
| $I_1$ | = the current through the first film |
| $I_2$ | = the current through the second film |
| $\Delta\rho_{1,2}$ | = the anisotropic magneto-resistance effect |
| $d_1$ | = the thickness of the first film |
| $d_2$ | = the thickness of the second film |
| $\theta$ | = the relative angular position to be measured |
| $k$ | = a calibration constant |

In the case, in which both thin films are in the form of roung rings the signal processing means are adapted for calculating said angular position from both said voltages according to the relations:

$$V_1 = I_1 \, \frac{\Delta\rho_1}{d_1} \cdot \frac{1}{\ln\left((r_1 + w_1/2) / (r_1 - w_1/2)\right)} \, \sin 2\theta$$

$$V_2 = I_2 \, \frac{\Delta\rho_2}{d_2} \cdot \frac{1}{\ln\left((r_2 + w_2/2) / (r_2 - w_2/2)\right)} \, \cos 2\theta$$

in which

| | |
|---|---|
| $V_1$ | = the voltage over the first film |
| $V_2$ | = the voltage over the second film |
| $I_1$ | = the current through the first film |
| $I_2$ | = the current through the second film |
| $\Delta\rho_{1,2}$ | = the anisotropic magneto-resistance effect |
| $d_1$ | = the thickness of the first film |
| $d_2$ | = the thickness of the second film |
| $r_1$ | = the radius of the first ring upto the half width |
| $r_2$ | = the radius of the first ring upto the half width |
| $w_1$ | = the radial dimension of the first ring |
| $w_2$ | = the radial dimension of the second ring |
| $\theta$ | = the relative angular position to be measured |

which for $r_{1,2} \gg w_{1,2}$ passes to:

$$V_1 = I_1 \, \frac{\Delta\rho_1}{d_2} \, \frac{r_1}{w_1} \, \sin 2\theta$$

$$V_2 = I_2 \, \frac{\Delta\rho_2}{d_2} \, \frac{r_2}{w_2} \, \cos 2\theta$$

On basis of the above-mentioned mathematical relations, in which the voltages occurring as a result of modulation of the resistance-anisotropy are brought into relation with the sine and the cosine, respectively, of the double value of the relative angular position to be measured, one can understand that the measurement of the relative angular position can be considered as the interpretation of a Lissajous-figure. In particular in the case in which the currents through both films are equal the anisotropic magneto-resistance-effect and the thicknesses of both films are equal, said Lissajous-figure is a circle. The measurement of the angular position, thus, is essentially a phase-measurement; namely, this Lissajous-figure is phase-linear. Even in case of a deviation of a current once adjusted the measurement can be performed in a reliable fashion as, namely, only the relation between both voltages is considered, in terms of a direction in a Lissajous-figure.

In order to be able to construct the control and signal processing unit as simply as possible and to avoid as much as possible dimensioning effects, advantageous use may be made of an alternative embodiment in which the films are identical.

In a preferred embodiment both films are rotation-symmetrical. In general sharp angles are as much as possible avoided in order to avoid domain forming. Rotation symmetry has the advantage of identical magnetic behaviour of both elements. In case of a circle-shaped ring shape effects cancel by averaging, due to which the measuring linearity is excellently guaranteed. It should be noted that "rotation-symmetry" and "ring-shaped" should be interpreted in such a broad sense, that the alternative embodiment with the ring constructed in the way of a meander is covered by that formulation.

In an embodiment in which the amplitudes of the currents through the current passing terminals of both films are equal the electronic control and signal processing unit can be constructed even more easily, whilst furthermore it can be considered as an advantage that heating phenomena are equal in both films.

It will be obvious that the greatest advantages are obtained in the case, in which use is made of two identical, rotation-symmetrical thin films through which equal currents are caused to flow.

An extremely high accuracy can, if desired, be achieved with an embodiment which is characterized by, means for compensating error-angles occurring due to the magnetical anisotropy of the thin films, in which the distance of the magnet relative to the thin films, the strength of the magnet, and the shapes of the magnet and the films are chosen in such a way, that the shape of the magnetic field in the region of the thin films and said error-angle approximately compensate for each other. The accuracy achieved with this embodiment is not accompanied by a strong increase of the manufacturing costs.

Balancing problems can substantially completely be avoided with an embodiment exhibiting the feature that both thin films are in the form of one film that the control means are adapted for successively and alternately passing current through the one set and the other set current passing terminals, respectively, and that the measuring means are adapted for successively and alternately measuring the voltages belonging thereto. In this last-mentioned embodiment the advantage of very simple electronics is more or less cancelled by the necessity to control and to measure in a switching fashion. Within one element an imbalance can occur disturbing the sine-shape of the angular sensitivity. The provision of two additional strips, in case of a ring or disc-shaped sensor in parallel relation with one side of the element and in case of a meander-shaped sensor in series with the meanders in such a way that they contribute only to a small degree to the total output voltage, can offer a solution. By laser-cutting or another trimming operation in these strips the imbalance can be cancelled. A small deviation due to roughness of cuts or due to unequal shapes is the result. This deviation, however, is very small, as the contribution of these parts to the output voltage of the element is very small.

In view of the required accuracy of the angle transducer the magnetic element in the region of the sensor should be rectilinear within the required accuracy, now to be less dependent upon the position and the properties of the magnet one can use a method of manufacturing an angle transducer according to which method one manufactures a ring-shaped strip of magnetically soft material and uses the shape-preference direction extending tangentially along the ring, in order to direct the intrisic or material preference during an annealing operation, i.e. a temporary temperature increase of the ring up to the order of magnitude of 300-350°C.

The invention will now be explained with reference to the drawing of some arbitrary embodiments, to which the invention, however, is not limited.

Fig. 1 is a perspective view, partially broken away of an angle transducer according to the invention;

Fig. 2 is a chip provided with two flat thin films of magnetically soft material as is used in the embodiment according to fig. 1;

Fig. 3 is the chip according to fig. 2 in an inhomogeneous magnetic field, as an explanation of the error-angle compensation as a result of magnetical anisotropy of the thin films;

Fig. 4 is a block schematic diagram of the device according to fig. 1;

4

Fig. 5 is a block schematic diagram corresponding with fig. 4 of an alternative embodiment, in which both films are in the form of one film;

Fig. 6 is a plan view of an alternative embodiment provided with films having the shapes of square rings;

Fig. 7 is a plan view of an alternative embodiment provided with films having the shapes of circle-shaped rings;

Fig. 8 is a schematic perspective view of a variant provided with three films connected with each other in the way of a meander and having the general shapes of circle-shaped rings;

Fig. 9 is a plan view of one ring in a more sophisticated embodiment of the variant according to fig. 8;

Fig. 10 is the detail X form fig. 8; and

Fig. 11 is a schematic perspective view of a variant provided with five films connected with each other in the way of a meander and having the general shapes of circle-shaped rings.

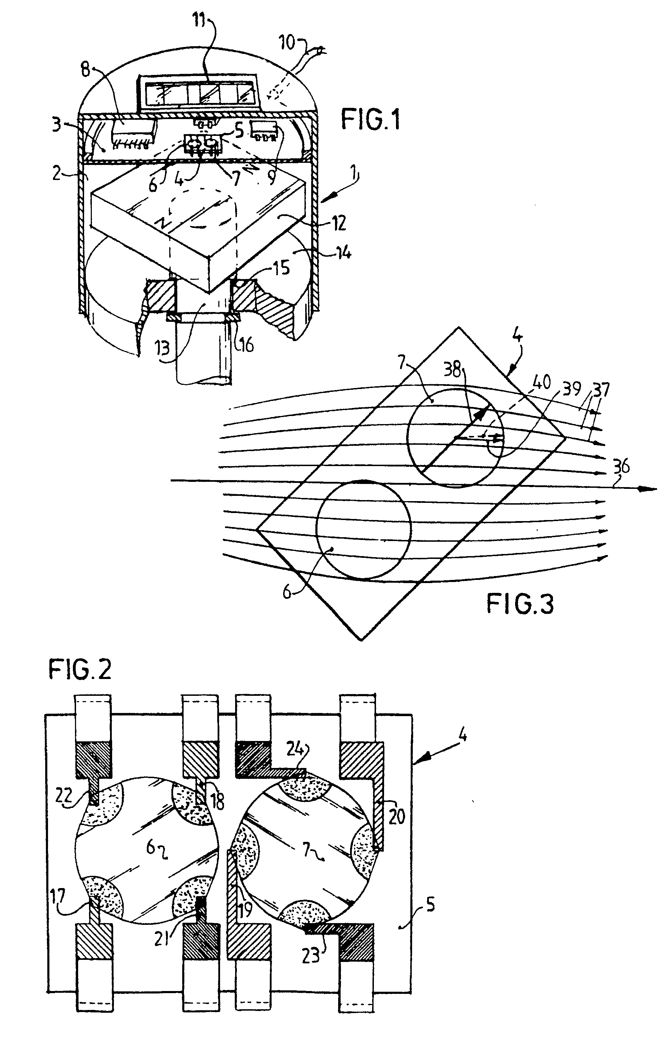

Fig. 1 shows an angle transducer 1, comprising a house 2 in which a carrier plate 3 is fixed. The carrier plate 3 supports an integrated unit 4 (see also fig. 2) consisting from a substrate 5 of magnetically inert material, on which two thin films 6, 7 of magnetically soft material are formed by vapour deposition or another deposition method.

The carrier plate 3 furthermore supports an electronic control and signal processing unit, consisting of integrated circuits 8 and 9 that can be connected with peripheral equipment and an electrical supply by means of a cable 10. The house 2 that by means not-shown can be rigidly coupled with a member, device or the like, the angular position of which has to be determined relative to another element, another device or the like, furthermore carries an alphanumerical presentation unit 11 provided with liquid cristals, on which the measured angular position is displayed in a directly readable manner.

In the house 2 permanent magnet 12 is positioned on a shaft 13 in such a way that it is rotatable relative to the house. The axis of the shaft 13 extends to the centre of the integrated unit 4. The shaft 13 is beared in a relatively thick closing plate 14 of the house 2 and secured by a peripheral shoulder 15 on the one hand and by a securing ring 16 on the other hand.

For the sake of clarity of fig. 1 connection conductors between the integrated unit 4 on the one hand and the integrated circuits 8, 9 on the other hand are not shown.

The angle transducer 1 is adapted for the determination of the angle between the house 2 and the orientation of the magnetization of magnet 12, therefore, between the house 1 and the shaft 13. If the house 2 is coupled with the one element and the shaft 13 with the other element, thus the angle transducer 1 can assess the angular position between both elements.

As has been noted already, fig. 2 shows the integrated unit 4. The thin films 6, 7 are provided with current passing terminals 17, 18 and 19, 20, respectively. The contacts 17, 18 and 19, 20, respectively, are arranged in diagonal relation. Also in diagonal relation, but in transverse direction relative to the mentioned current passing terminals 17, 18 and 19, 20 the films 6, 7 are provided with voltage measuring terminals 21, 22 and 23, 24, respectively. While passing current through current passing terminals 17, 18 and 19, 20, respectively, in presence of a magnet field as will be caused by the magnet 12, the planar Hall-voltage is measured at the voltage measuring terminals 21, 22 and 23, 24 respectively. As fig. 2 clearly shows, the current passing terminals 17, 18 are positioned on a diagonal forming an angle of $45°$ with the diagonal connecting the current passing terminals 19, 20. Mutatis mutandis the same is valid for the voltage measuring terminals 21, 22 and 23, 24, respectively.

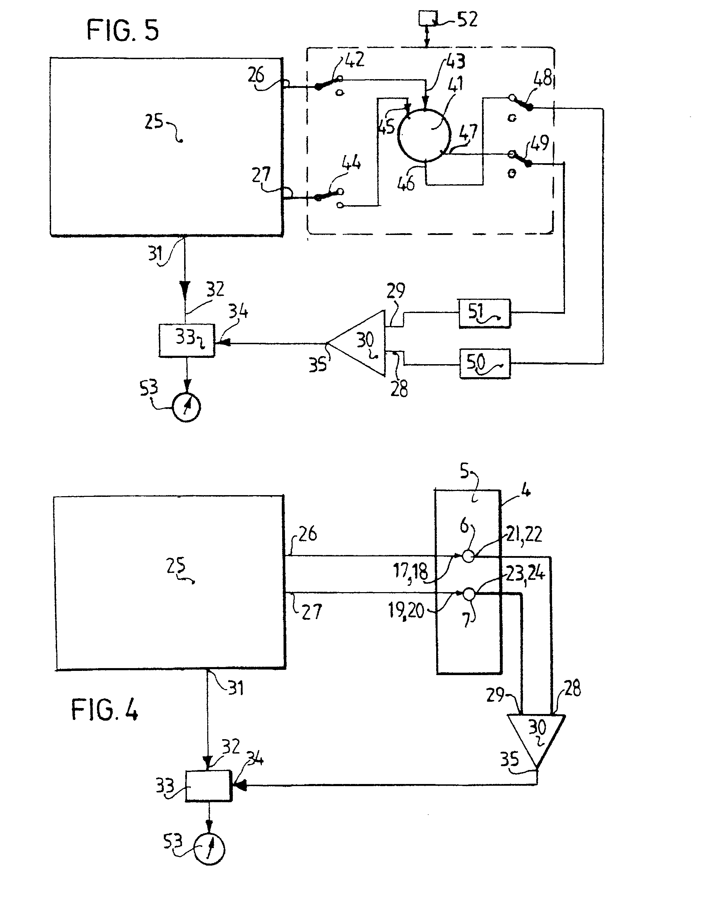

Fig. 4 shows by way of example an electronic circuit of which the integrated unit 4 may form part.

A sine generator 25 generates two AC-currents relatively phase-shifted with $90°$, I sin ($\omega$ t) and I cos ($\omega$ t) at respective output terminals 26 and 27. The terminal 26 is connected with the current passing terminals 17, 18 of the thin film 6, which is shown for the sake of ease of one line and the terminal 27 is connected with the current passing terminals 19, 20 of the thin film 7. The voltage at the voltage measuring terminals 21, 22 of the thin film 6 is supplied to the one input 28 of a comparator 30, whilst the voltage at the voltage measuring terminals 23, 24 of the thin film 7 is supplied to the other terminal 29 of the comparator 30.

The sine generator 25 supplies through an output 21 a voltage proportional with the phase of the output signal at terminal 26, i.e. linearly varying voltage periodically returning to zero, a sawtooth voltage. It is noted that this relates to an analog technique, whilst as will be understood also digitally operating circuits may be used.

The output signals of films 6, 7, i.e. the signals at the inputs 28 and 29 of comparator 30 are proportional with I $\sin(\omega$ t$).\cos(2\theta)$, en I.cos ($\theta$ t) and I $\cos(\omega$ t$).\sin(2\theta)$, respectively, in which $\theta$ is the angle between the house 2 according to fig. 1 and the shaft 13 on which the magnet 12 is fixed.

The output 31 is connected with the information-input 32 of a memory/clock unit 33, the clock-input 34 of which is connected with the output 35 of comparator 30.

The memory/clock unit 33 is connected with an analog display unit 53.

Fig. 3 shows the integrated unit 4 according to fig. 2 in an inhomogeneous magnet field, that schematically is indicated with field lines 37. With reference to fig. 1 it will be clear that the relative positioning of magnet 12 and the unit 4 is such that the field line extending through the unit 4, that has been indicated with 36 for the sake of clarity, is a straight line. To the degree in which the distance in the plane of the unit 4 relative to the central line 36 increases also the curvature of the field lines increases. In the situation shown in fig. 3 the connection line between the centre points of the magnetic films 6 and 7 does not coincide with the central field line 36, but forms an angle therewith. An arrow 38 indicates the preferred direction of the thin film 7. An arrow 39 indicates the direction of the field applied. As a result of the magnetic anisotropy of the film 7, manifesting itself as the preferred direction 38, the magnetization of the film 7 will not have the direction of the magnetic field according to arrow 39, but deviate therefrom in the direction of the preferred direction 38. The magnetization is indicated with an interruptedly-shown arrow 40. It will be clear that due to the curvature of the field lines 37 in that region the magnetic field makes a certain angle with the direction of the central line 36, which if it would also be the magnetization of film 7, would introduce an angular error and thus a measuring error. As, however, the magnetization is directed in correspondence with arrow 40 as a result of the co-operation of the magnetical anisotropy of film 7 on the one hand and the shape of the magnetic field 37 applied a compensation occurs, in other words, the magnetization 40 extends in a more parallel relation with the field line 36 than magnet field 39.

The above has for its purpose to indicate the principle on basis of which an angle transducer having an error angle as small as possible can be manufactured.

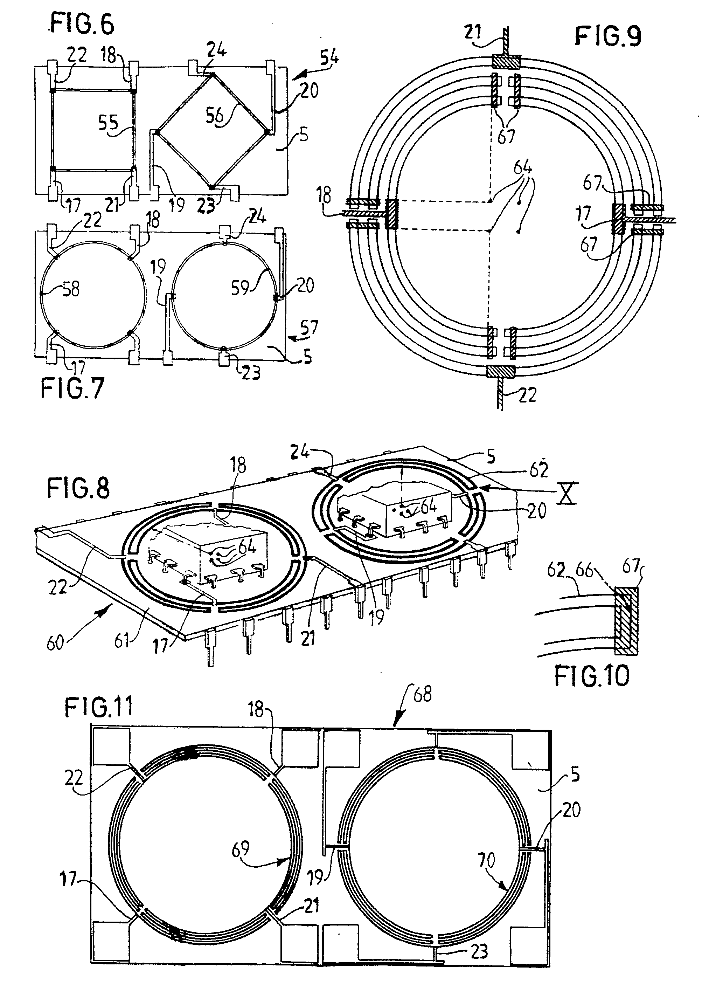

In the case to be discussed hereinafter with reference to fig. 5 in which only one switchingly driven magnetizable film is used, it should, in view of the error correction in accordance with fig. 3 also be arranged excentrically rotatable.

As has been said already this manner of error correction is based on a magnetically anisotropic film and an inhomogeneous magnetic field chosen on basis thereof. Such an error correction is not necessary if the film is isotropic and the field is homogeneous. This last-mentioned feature, however, cannot also be realized in a simple fashion.

In fig. 3 for clarity's sake that is refrained from showing electrically connections of films 6 and 7.

Fig. 5 shows a schematic circuit in accordance with fig. 4. In fig. 4 two magnetic films are used, whilst fig. 5 relates to an alternative embodiment in which both thin films are in the form of one film, in which in a switching manner successively current is passed through the one set and the other set of current passing terminals, respectively, whilst also in a switching fashion successively the related planar Hall-voltages are taken off the related voltage measuring terminals.

A thin film 41 is provided with two sets of current passing terminals having a mutual angular position of 45° and two pairs of voltage measuring terminals exhibiting angles of 90° relative to their corresponding current passing terminals and therefore exhibiting also a mutual relative angular position of 45°. As in the schematic presentation of fig. 4 for clarity's sake in fig. 5 the pairs of terminals are indicated with only one reference. With output terminal 26 of the sine generator 25 by means of a switch 42 a first pair of current passing terminals 43 is connected. A switch 44 connects output 27 with a second set of current passing terminals 45. The corresponding pairs of voltage measuring terminals of the thin film 41 are indicated with 46 and 47, respectively. They are, through respective switches 48, 49, through sample/hold circuits 50 and 51, respectively, connected with the inputs 28 and 29 of the comparator 30. A clock unit 52 controls the switches 42, 44, 48, 49 in a synchronous fashion. Due thereto successively current is passed through the terminals 43 and the measured voltage at the voltage measuring terminals 46 is passed through switch 48 to the sample and the hold circuit 50 and current is through switch 44 passed to the current passing terminals 45, the corresponding voltage at the terminals 47 is through switch 49 supplied to the sample and hold circuit 51.

It is noted that both films of a pair can also be positioned with small relative distance over each other. Parts of the embodiments according to figs. 6, 7, 8, 9, 10 and 11 to be discussed hereinafter corresponding with parts already mentioned of particularly the embodiment according to fig. 2 , will be indicated with the same reference numerals as there and will not be discussed.

Fig. 6 shows an integrated unit 54 for an angle transducer in plan view, corresponding to fig. 2. In this embodiment use is made of two films 55, 56 made of magnetically soft material each having the shape of a square ring.

Fig. 7 shows an integrated unit 57 provided with two films 58, 59 made of magnetically soft material each having the shape of a circular ring.

Fig. 8 shows an integrated unit 60 provided with two films 61, 62. Each part extending between a current passing terminal 17, 18; 19, 20 and a voltage measuring terminal 21, 22; 23, 24 of each film 61, 62 is in the form of three concentrically arranged strips, each extending over an angle of 90° and connected with their ends in the way of a meander by means of radial connection strips. The respective curvature-centres are all indicated with 64.

In this embodiment the surface surrounded by each of the ring 61, 62, of the substrate 5, is used for carrying an IC 63. The IC's 63 comprise electronic circuits forming part of the angle transducer and which already have been discussed with reference to fig. 4.

Fig. 9 shows a film 65 of magnetically soft material in an alternative embodiment of the film 61 according to fig. 8. Fig. 10 shows as the detail X according to fig. 8 that the ends of the respective parts of the film 61 are connected by means of a radial part of the film 61, which is electrically short-circuited by an aluminum coating layer 67. In the embodiment according to fig. 9 no radial connection strips of magnetically soft material are present between the ends of the film parts. The ends extend beyond the aluminum coating layers 67 operative as connection strips, which is favourable for the magnetic behaviour of the film parts at their ends.

The terminals 17, 18, 21, 22 are in the form of aluminum strips, the ends of which are broadened in such a way that the concentric film parts between successive ends extend over exactly $90°$.

Fig. 11 at last shows an integrated unit 68 in plan view of an alternative embodiment of the unit 60 according to fig. 8. The films 61, 62 of the unit 60 comprise three concentric film parts, whilst the films 69, 70 comprise five concentric film parts.

## Claims

1. Angle transducer (1) having at least one magnetically active element (6,7) that is connected with a control and signal processing unit (25) and a magnet (12) co-operating therewith and relatively thereto rotatably positioned in such a way that an electrical property of that or each magnetically active element (6,7) varies in dependence upon its angular position relative to the magnet (12), said control and signal processing unit (25) being adapted for measuring the value of a quantity related with said property and generating a signal representative for said value and thus for said relative angular position, characterized by

   at least one set of two mutually parallel flat thin films (6,7) of magnetically soft material that is kept in saturation by the magnet (12), said films (6,7) exhibiting resistance anisotropy, each having two current passing terminals (17,18;19,20) positioned at the ends of a first diagonal and two voltage measuring terminals (21,22; 23,24) positioned at the ends of a second diagonal positioned perpendicular to said first diagonal, said first and said second diagonals of the first film 6 forming angles of $45°$ with said first and second diagonals of the second film 7.

   control means (25) forming part of the signal processing unit for supplying electrical currents through the current passing terminals of both films;

   measuring means (30) forming part of the signal processing unit for measuring the voltages over the voltage measuring terminals of both films (6,7); and

   signal processing (33) means forming part of the signal processing unit for calculating said angular position from both voltages.

2. Angle transducer according to claim 1, characterized in that both films (6,7) are disc-shaped.

3. Angle transducer according to claim 1, characterized in that both films (55,56) are ring-shaped.

4. Angle transducer according to claim 3, characterized in that a part of the ring-shaped film (69,70) extending between a current passing terminal (17,18; 19,20) and a voltage measuring terminal (21,22; 23 24) is in the form of a plurality of concentrically arranged strips, each of said strips extending over an angle of $90°$, and said strips in meander-fashion electrically connected with their ends by means of radial connection strips (67).

5. Angle transducer according to claim 4, characterized in that the connection strips (67) are electrically short-circuited.

6. Angle transducer according to any one of the preceding claims, characterized in that both films (6,7) are identical.

7. Angle transducer according to any one of the preceding claims, characterized in that both films are rotation-symmetrical (6,7).

8. Angle transducer according to any one of the preceding claims, characterized in that the amplitudes of the currents through both films (6,7) are equal.

9. Angle transducer according to any one of the preceding claims, characterized by means for compensating error-angles occurring due to the magnetical anisotropy of the thin films, in which the distance of the magnet (12) relative to the thin films (6,7), the strength of the magnet (12), and the shapes of the magnet (12) and the films are chosen in such a way, that the shape of the magnetic field (37) in the region of the thin films (6,7) and said error-angle approximately compensate for each other.

10. Angle transducer according to any one of the preceding claims, characterized in that both thin films are in the form of one film (41), that the control means (25,42,44) are adapted for successively and alternately passing currents through the one set and the other set current passing terminals (43,45) respectively, and that the measuring means (48,49,50,51,30,33) are adapted for successively and alternately measuring the voltages belonging thereto.

11. A method of manufacturing an angle transducer according to claim 3, characterized in that one manufactures a ring-shaped strip of magnetically soft material and uses the shape-preference direction extending tangentially along the ring, in order to direct the intrisic or material preference during an annealing operation, i.e. a temporary temperature increase of the ring upto in the order of magnitude of 300-350° C.

**Revendications**

1. Transducteur d'angle (1) comportant au moins un élément actif magnétiquement (6,7) qui est relié à une unité de commande et de traitement de signal (25) et à un aimant (12) qui coopère avec lui et qui est disposé à rotation par rapport à lui de telle manière qu'une propriété électrique dudit ou desdits éléments actifs magnétiques (6,7) varie en fonction de sa position angulaire par rapport à l'aimant (12), ladite unité de commande et de traitement de signal (25) étant adaptée pour mesurer la valeur d'une quantité liée à ladite propriété et engendrant un signal représentatif de ladite valeur et, par suite, de ladite position angulaire relative,
caractérisé par
   au moins un ensemble de films (6,7) minces et parallèles entre-eux, en un matériau magnétique doux qui est maintenu, à l'état saturé par l'aimant (12), lesdits films (6,7) présentant une anisotropie de résitance, chacun comportant deux bornes de passage de courant (17,18;19,20) disposées aux extrémités d'une première diagonale et deux bornes de mesure de tension (21,22;23,24) disposées aux extrémités d'une seconde diagonale disposée perpendiculairement à ladite première diagonale, lesdites première et seconde diagonales du premier film 6 formant des angles égaux à 45° par rapport auxdites première et seconde diagonales du second film 7.
   - un organe de contrôle (25) constituant une partie de l'unité de traitement de signal et destiné à fournir des courants électriques par l'intermédiaire des bornes de passage de courant des deux films ;
   - un organe de mesure (30) constituant une partie de l'unité de traitement de signal et destiné à mesurer les tensions présentes sur les bornes de mesure de tension des deux films (6,7) ; et
   - un organe de traitement de signal (33) constituant une partie de l'unité de traitement de signal et destiné à calculer ladite position angulaire à partir des deux tensions.

2. Transducteur d'angle selon la revendication 1, caractérisé en ce que les deux films (6,7) sont en forme de disque.

3. Transducteur d'angle selon la revendication 1, caractérisé en ce que les deux films (55,56) sont en forme d'anneau.

4. Transducteur d'angle selon la revendication 3, caractérisé en ce qu'une partie du film en forme d'anneau (69,70) qui s'étend entre une borne de passage de courant (17,18;19,20) et une borne de mesure de tension (21,22;23,24) est sous la forme d'une pluralité de bandes disposées de manière concentrique, chacune desdites bandes s'étendant sur un angle de 90° et lesdites bandes étant reliées électriquement sous forme de méandre avec leurs extrémités au moyen de bandes de connexions radiales (67).

5. Transducteur d'angle selon la revendication 4, caractérisé en ce que les bandes de connexions (67) sont court-circuitées électriquement.

6. Transducteur d'angle selon l'une quelconque des revendications précédentes, caractérisé en ce que les deux films (6,7) sont identiques.

7. Transducteur d'angle selon l'une quelconque des revendications précédentes, caractérisé en ce que les deux films (6,7) présentent une symétrie de rotation.

8. Transducteur d'angle selon l'une quelconque des revendications précédentes, caractérisé en ce que les amplitudes des courants dans les deux films (6,7) sont égales.

9. Transducteur d'angle selon l'une quelconque des revendications précédentes, caractérisé par un organe destiné à compenser des erreurs d'angle survenant du fait le l'anisotropie magnétique des films minces dans lesquels la distance de l'aimant (12) par rapport aux films minces (6,7), la force de l'aiment (12) et les formes de l'aimant (12), et les films sont choisis de telle manière que la forme du champ magnétique (37) dans la zone des films minces (6,7) et ladite erreur d'angle se compensent approximativement l'une l'autre.

10. Transducteur d'angle selon l'une quelconque des revendications précédentes, caractérisé en ce que les deux films minces sont sous la forme d'un film (41), que l'organe de commande (25,42,44) est adapté pour faire passer successivement et alternativement des courants dans l'un et dans l'autre des ensembles de bornes de passage de courant (43,45) respectivement et en ce que l'organe de mesure (48,49,50,51,30,33) est adapté pour mesurer successivement et alternativement les tensions correspondantes.

11. Procédé de fabrication d'un transducteur d'angle selon la revendication 3, caractérisé en ce que l'on fabrique une bande en forme d'anneau en matériau magnétique doux et que l'on utilise la direction de préférence de forme s'étendant tangentiellement le long de l'anneau de manière à diriger la préférence intrinsèque ou de matière pendant une opération de recuit, c'est-à-dire une augmentation temporaire de température de l'anneau jusqu'à une valeur d'un ordre de grandeur de 300° à 350° C.

## Patentansprüche

1. Winkelsensor (1) mit zumindestens einem magnetisch aktiven, mit einer Steuer- und Signalverarbeitungseinheit (25) verbundenen Element (6,7) und mit einem mit diesem zusammenwirkenden und relativ zu diesem drehbar derart angeordneten Magnet (12), daß sich eine elektrische Eigenschaft des oder jedes magnetisch aktiven Elementes (6,7) in Abhängigkeit von der Winkelposition dieses Elementes gegenüber dem Magneten (12) ändert, wobei die Steuer- und Signalverarbeitungseinheit (25) zur Messung des Wertes einer Größe, die auf diese elektrische Eigenschaft bezogen ist, und zur Erzeugung eines Signals ausgebildet ist, das diesen Wert und damit die relative Winkelstellung darstellt,
**gekennzeichnet** durch
    zumindestens einen Satz von zwei zueinander parallelen ebenen dünnen Filmen (6,7) aus magnetisch weichem Material, das durch den Magneten (12) in Sättigung gehalten wird, wobei die Filme (6,7) eine Widerstands-Anisotropie aufweisen und jeweils zwei Stromzuleitungsanschlüsse (17,18;19,20), die an den Enden einer ersten Diagonale angeordnet sind, und zwei Spannungsmeßanschlüsse (21,22;23,24) aufweisen, die an den Enden einer zweiten Diagonale angeordnet sind, die senkrecht zu der ersten Diagonale verläuft, und wobei die ersten und zweiten Diagonalen des ersten Filmes (6) Winkel von 45° mit den ersten und zweiten Diagonalen des zweiten Filmes (7) bilden;
    Steuereinrichtungen (25), die einen Teil der Signalverarbeitungseinheit bilden, um elektrische Ströme durch die Stromzuleitungsanschlüsse beider Filme zu liefern;
    Meßeinrichtungen (30), die einen Teil der Signalverarbeitungseinheit bilden, um die Spannungen längs der Spannungsmeßanschlüsse beider Filme (6,7) zu messen; und

Signalverarbeitungseinrichtungen (33), die einen Teil der Signalverarbeitungseinheit bilden, um die Winkelstellung aus beiden Spannungen zu berechnen.

2. Winkelsensor nach Anspruch 1,
dadurch **gekennzeichnet,** daß beide Filme (6,7) scheibenförmig sind.

3. Winkelsensor nach anspruch 1,
dadurch **gekennzeichnet,** daß beide Filme (55,56) ringförmig sind.

4. Winkelsensor nach Anspruch 3,
dadurch **gekennzeichnet,** daß ein Teil des ringförmigen Filmes (69,70), der sich zwischen einem Stromzuleitungsanschluß (17,18;19,20) und einem Spannungsmeßanschluß (21, 22;23,24) erstreckt, die Form einer Vielzahl von konzentrisch angeordneten Streifen aufweist, daß sich jeder der Streifen über einen Winkel von 90° erstreckt, und daß die Streifen mäanderförmig elektrisch mit ihren Enden mit Hilfe von radialen Verbindungsstreifen (67) verbunden sind.

5. Winkelsensor nach Anspruch 4,
dadurch **gekennzeichnet,** daß die Verbindungsstreifen (67) elektrisch kurzgeschlossen sind.

6. Winkelsensor nach einem der vorhergehenden Ansprüche, dadurch **gekennzeichnet,** daß beide Filme identisch sind.

7. Winkelsensor nach einem der vorhergehenden Ansprüche, dadurch **gekennzeichnet,** daß beide Filme drehsymmetrisch (6,7) sind.

8. Winkelsensor nach einem der vorhergehenden Ansprüche, dadurch **gekennzeichnet,** daß die Amplituden der Ströme (6,7) durch beide Filme (6,7) gleich sind.

9. Winkelsensor nach einem der vorhergehenden Ansprüche, **gekennzeichnet** durch Einrichtungen zur Kompensation von Fehlerwinkeln, die aufgrund der magnetischen Anisotropie der dünnen Filme auftreten, wobei der Abstand des Magneten (12) von den dünnen Filmen (6,7), die Stärke des Magneten (12) und die Formen des Magneten (12) und der Filme derart gewählt sind, daß die Form des Magnetfeldes (37) im Bereich der dünnen Filme (6,7) und der Fehlerwinkel einander angenähert kompensieren.

10. Winkelsensor nach einem der vorhegehenden Ansprüche, dadurch **gekennzeichnet,** daß die beiden dünnen Filme die Form eines einzigen Films (41) aufweisen, daß die Steuereinrichtungen (25,42,44) so ausgebildet sind, daß sie aufeinanderfolgend und abwechselnd Ströme durch den einen Satz bzw. den anderen Satz von Stromzuleitungsanschlüssen (43,45) hindurchleiten, und daß die Meßeinrichtungen (48,49,50,51,30,33) so ausgebildet sind, daß sie aufeinanderfolgend und abwechselnd die hierzu gehörigen Spannungen messen.

11. Verfahren zur Herstellung eines Winkelsensors nach Anspruch 3, dadurch **gekennzeichnet,** daß ein ringförmiger Streifen aus magnetisch weichem Material hergestellt wird, und daß die Formvorzugsrichtung, die sich tangential entlang des Ringes erstreckt, verwendet wird, um die intrinsische oder Material-Vorzugsrichtung während eines Tempervorganges, das heißt einer vorübergehenden Temperaturerhöhung des Ringes auf einen Wert in der Größenordnung von 300 bis 350° C, zu richten.

FIG.1

FIG.3

FIG.2

FIG. 5

FIG. 4

FIG.6

FIG.9

FIG.7

FIG.8

FIG.10

FIG.11